# EUROPEAN PATENT SPECIFICATION

(11) **EP 1 028 085 B1**
(45) Date of publication and mention of the grant of the patent: **07.12.2005**
(21) Application number: 00102703.6
(22) Date of filing: 09.02.2000
(51) Int. Cl.: B66F 9/06, B65G 67/04

(54) **Storage area loading and unloading system**
System zum Beladen und Entladen eines Aufbewahrungsraums
Système de chargement et déchargement d'un espace de stockage

(30) Priority: 11.02.1999 US 120407 P
(43) Date of publication of application: 16.08.2000
(73) Proprietor: Gestion Laforest Inc., St.Hubert, Quebec J3Y 8Y6 (CA)
(72) Inventor: Gagnon, Pierre, Montreal, Quebec H2V 2B1 (CA); Laforest, Pierre, Montreal, Quebec H2M 2CA (CA); Gobeil, Alain, Quebec, Canada (CA); Forté, Alain, Quebec, Canada (CA)
(74) Representative: Wenger, Joel-Théophile

(56) References cited:
- EP-A- 0 176 756
- DE-A- 3 115 936
- FR-A- 2 725 436
- US-A- 4 496 274

## Description

### FIELD OF THE INVENTION

The present invention relates to a storage area loading and unloading system, and more particularly to a system including an automated forklift carriage used for loading and unloading articles into and from transport trucks.

### BACKGROUND OF THE INVENTION

United States patent No. 4,439,093 issued in 1984 to R.W. Victorino discloses a system for handling palletized articles. This system includes *inter alia* the step of loading the palletized articles into a conventional semi-trailer truck with a conventional forklift truck, as known in the art. However, it becomes difficult to efficiently load a semi-trailer truck with palletized articles, without unnecessarily losing space inside the truck, and at an efficient speed, without the forklift truck driver accidentally hitting the semi-trailer truck walls with the articles while loading them, considering the often small lateral clearance between the forklift truck loaded with articles and the semi-trailer lateral walls.

Some automated truck loading systems have been developed, such as the one shown in United States patent No. 4,171,178 issued in 1979 to R. Birkenfeld *et al.* and forming the basis for the preamble of the independent claim. In this patent, a rail-guided carriage is shown to be used to load a truck from its lateral sides. The rail-guided carriage has the disadvantage of requiring a flawless alignment of the truck relative to the loading dock for loading the articles into the truck in a space-efficient manner. Indeed, should the truck be positioned in a non-parallel relationship with the carriage rails, then the articles will be positioned in a non-parallel fashion relative to the truck walls, and economically valuable space will be wasted inside the semi-trailer. Also, the Birkenfeld patent shows a truck being loaded sidewardly, but it is understood that it is more complex and it requires more precision for a carriage to be aligned relative to the rear opening of a conventional rearwardly-opened semi-trailer truck such as the one shown in the above-mentioned Victorino patent, than it is for a carriage to be aligned with the often wider side openings of laterally loaded trucks such as the one shown in the Birkenfeld patent. Also, conventional merchandise semi-trailers are more often provided with a rear opening, so the Birkenfeld system is not representative of the most likely type of truck encountered. DE-A-3115936 shows an article loading /unloading system with a drive unit comprising laterally disposed wheels to centre the article carrying unit.

### OBJECTS OF THE INVENTION

It is thus an object of the present invention to circumvent the disadvantages of the prior art systems and apparatuses, by providing a truck loading system which allows a conventional truck to be loaded with articles which will be automatically aligned relative to the truck opening.

It is another object of the present invention to provide an article-carrying carriage which will self-align itself between fixed spaced-apart surfaces.

### SUMMARY OF THE INVENTION

The present invention relates to a carriage for carrying articles, said carriage having two sides, and a front and a rear end defining a longitudinal axis therebetween, said carriage comprising a main rigid frame, ground-engaging wheels rollably mounted to said frame parallel to said longitudinal axis for carrying said frame over ground, a motor mounted to said frame for feeding power to and driving said carriage along said longitudinal axis, a powered article-carrying device mounted to said carriage frame for carrying the articles on said carriage, and a number of lateral idle guide elements horizontally rollably mounted to said frame and laterally protruding beyond said frame on both said carriage sides for rollable abutment of said alignment wheels against lateral surfaces for allowing self-alignment of said carriage with respect to the lateral surfaces when said carriage is moving along said longitudinal axis.

The carriage further comprises a linkage pivotally attached to said frame and rollably carrying said idle guide elements, said guide elements forced by said linkage into an integral common displacement relative to said frame so as to remain symmetrically disposed relative to said frame at all times, said guide elements carried by said linkage being movable between an inner limit position toward said frame and an outer limit position away from said frame, said carriage also comprising a biasing member mounted to said frame and continuously biasing said elements through the instrumentality of said linkage towards said outer limit position; and wherein said carriage is adapted for self-alignment between spaced-apart surfaces by means of said guide elements continuously engaging the spaced-apart surfaces and by means of said linkage and said biasing member forcing said guide elements to remain symmetrically disposed relative to said carriage frame.

Preferably, said carriage further comprises a control unit for automatically controlling the displacement of said carriage along said longitudinal axis.

Preferably, said spring member is a hydraulic cylinder.

Preferably, said article-carrying member is a powered hydraulic forklift member located at said carriage front end.

There is also described a vehicle loading and unloading system for loading articles into and unloading articles from a number of vehicles each located at a respective loading station and each including a storage area having an open end and inner side walls, said system including:
- a carriage for carrying articles, said carriage having two sides, and a front and a rear end defining a longitudinal axis therebetween, said carriage comprising a main rigid frame, ground-engaging wheels rollably mounted to said frame parallel to said longitudinal axis for carrying said frame over ground, a motor for feeding power to and driving said carriage along said longitudinal axis, a powered article-carrying device mounted to said frame for carrying the articles on said carriage, and a number of lateral idle guide wheels horizontally rollably mounted to said frame and laterally protruding beyond said frame on both said carriage sides for rollable abutment of said guide wheels against the vehicle storage area side walls for allowing self-alignment of said carriage with respect to the vehicle storage area side walls when said carriage is moving along said longitudinal axis; and
- a bogie, able to carry said carriage and movable along a bogie horizontal axis transverse to said carriage longitudinal axis, said bogie comprising a motor for feeding power to and moving said bogie along said bogie axis, and a platform for receiving and supporting said carriage thereon and defining two sides and a front and a rear end portions, said bogie front end portion being opened at least when said carriage rolls out of and back onto said bogie; wherein said bogie is movable between the loading stations to allow said carriage to load articles onto and unload articles from the different vehicles storage areas located at each one of the loading stations.

Preferably, said carriage further comprises a linkage pivotally attached to said frame and rollably carrying said idle guide wheels, said guide wheels forced by said linkage into an integral common displacement relative to said frame so as to remain symmetrically disposed relative to said frame at all times, said guide wheels carried by said linkage being movable between an inner limit position toward said frame and an outer limit position away from said frame, said carriage further comprising a spring member mounted to said frame and continuously biasing said wheels through the instrumentality of said linkage towards said outer limit position; and wherein said carriage is adapted for self-alignment and self-centering between the vehicle storage area side walls by means of said guide wheels rollably engaging the side walls and by means of said linkage and said spring member forcing said guide wheels to remain symmetrically disposed relative to said carriage frame.

Preferably, said bogie comprises two parallel railings each fixedly attached to a corresponding said side of said bogie, the distance between said railings being equal to or lesser than the width of said carriage when said guide wheels are in said outer limit position, said railings vertically registering with said guide wheels, said guide wheels consequently continuously engaging said railings while said carriage is located between said railings for self-aligning and self-centering said carriage on said bogie due to said spring member and said linkage.

Preferably, said bogie further comprises a pair of gates pivotally mounted on each said side of said bogie at said bogie front end portion, said gates vertically registering with said carriage guide wheels and being pivotable between a closed condition in which they do not extend beyond the bogie front end portion, and an opened condition in which they extend beyond the bogie front end portion in a co-extensive and substantially collinear fashion relative to said railings, said gates having outer free ends destined to engage the two vehicle storage area side walls, for providing continuous side panels formed on either side of said carriage by said railings, said gates and the vehicle side walls, for continuous engagement of the side panels by said carriage guide wheels when said carriage moves between said bogie and said vehicle, said carriage thus being self-aligned and self-centered relative to said vehicle storage area during article loading and unloading operations in said vehicle storage area.

Preferably, said system further comprises a control unit for automatically controlling the displacement of said bogie along said bogie axis, the displacement of said carriage along said longitudinal axis, and the pivotal displacement of said gates.

Preferably, said spring member is a hydraulic cylinder.

Preferably, said article-carrying member is a powered hydraulic forklift member located at said carriage front end.

Preferably, said system further comprises a conveyor for conveying articles and located frontwardly of said bogie, wherein said carriage is destined to carry the articles with said forklift member from said conveyor into the vehicle for unloading them therein.

Preferably, said conveyor is an overhead conveyor located spacedly above ground, said carriage carrying the articles being destined to move underneath said overhead conveyor and to reach the articles on the conveyor with said forklift member.

Preferably, said control unit further automatically controls said conveyor, for positioning the articles thereon in a precise centered relationship relative to said bogie.

Preferably, said bogie is movable on fixed rails.

There is also described a vehicle loading and unloading system for loading articles into and unloading articles from a number of vehicles each located at a respective loading station and each having a storage area including an open end and parallel inner side walls, said system including:
- a loading dock at each said loading station, adapted to receive in a closely adjacent fashion the open end of the vehicle;
- a bridge panel at each said loading station, for bridging each said loading dock with a corresponding vehicle storage area;
- a carriage for carrying articles, said carriage having two sides, and a front and a rear end defining a longitudinal axis therebetween, said carriage comprising:
   - a main rigid frame;
   - ground-engaging wheels rollably mounted to said frame parallel to said longitudinal axis for carrying said frame over ground;
   - a motor for feeding power to and driving said carriage along said longitudinal axis;
   - a powered forklift member mounted to said frame at said front end thereof for carrying the articles on said carriage;
   - a linkage pivotally attached to said frame;
   - a number of lateral idle guide wheels horizontally rollably mounted to said linkage and laterally protruding beyond said frame on both said carriage sides, said guide wheels forced by said linkage into an integral common displacement relative to said frame so as to remain symmetrically disposed relative to said frame at all times, said guide wheels carried by said linkage being movable between an inner limit position toward said frame and an outer limit position away from said frame; and
   - a spring member mounted to said frame and continuously biasing said wheels through the instrumentality of said linkage towards said outer limit position; said system further comprising:
- a bogie mounted to fixed rails, able to carry said carriage and movable along a bogie horizontal axis transverse to said carriage longitudinal axis, said bogie comprising:
   - a motor for feeding power to and moving said bogie along said bogie axis;
   - a platform for receiving and supporting said carriage thereon and defining two sides and a front and a rear end portions;
   - two parallel railings each fixedly attached to a corresponding said side of said bogie, the distance between said railings being equal to or lesser than the width of said carriage when said guide wheels are in said outer limit position, said railings vertically registering with said guide wheels; and
   - a pair of gates pivotally mounted on each said side of said bogie at said bogie front end portion and defining outer free ends, said gates vertically registering with said guide wheels and being pivotable between a closed condition in which they do not extend beyond the bogie front end portion, and an opened condition in which they extend beyond the bogie front end portion in a co-extensive and substantially collinear fashion relative to said railings, and in which they clear the bogie front end portion;
and said system further comprising a conveyor, for conveying articles to be loaded into vehicles to each said loading station and for conveying articles unloaded from vehicles from each said loading station;
wherein said bogie is movable between the loading stations to allow said carriage to load articles onto or unload articles from vehicles located at each one of the loading stations, with said gates opening at each station where loading or unloading operations are to take place, said gates destined to abut with their outer free end portions against the side walls of the vehicle for forming with said railings and the vehicle side walls continuous side panels which will be continuously engaged by said carriage guide wheels while said carriage moves between said bogie and said vehicle storage area, thereby allowing self-alignment and self-centering of said carriage into said vehicle storage area due to the bias of said spring member against said guide wheels through the instrumentality of said linkage.

### DESCRIPTION OF THE DRAWINGS

In the annexed drawings:
Figure 1 is a perspective view of a loading dock, with the adjacent wall being broken away for showing the inner components of the loading station registering with the loading dock, figure 1 further showing the rear portion of a semi-trailer positioned so as to register with the loading dock and loading station, and the carriage-carrying bogie moving towards the loading station;
Figure 2 is a perspective view similar to figure 1, although at a slightly different angle, wherein the carriage-carrying bogie is aligned with the loading station, wherein the pivotable alignment gates are in a partly opened position and wherein palletized articles to be loaded into the semi-trailer are located on the overhead conveyor of the truck loading station;
Figures 3 to 6 are side elevations of the elements shown in figure 2, sequentially illustrating the steps of the articles being loaded into the semi-trailer;
Figure 7 is a perspective view of the carriage-carrying bogie of the invention, with the pivotable gates being shown in an opened condition;
Figures 8 and 9 are respectively a perspective view and a top plan view of the automated carriage of the invention;
Figure 10 is a perspective view of the frame structure and of the spring-loaded alignment linkage of the carriage of the invention; and
Figure 11 is a top plan view of the spring-loaded alignment linkage of the carriage according to the invention.

### DETAILED DESCRIPTION OF THE EMBODIMENTS

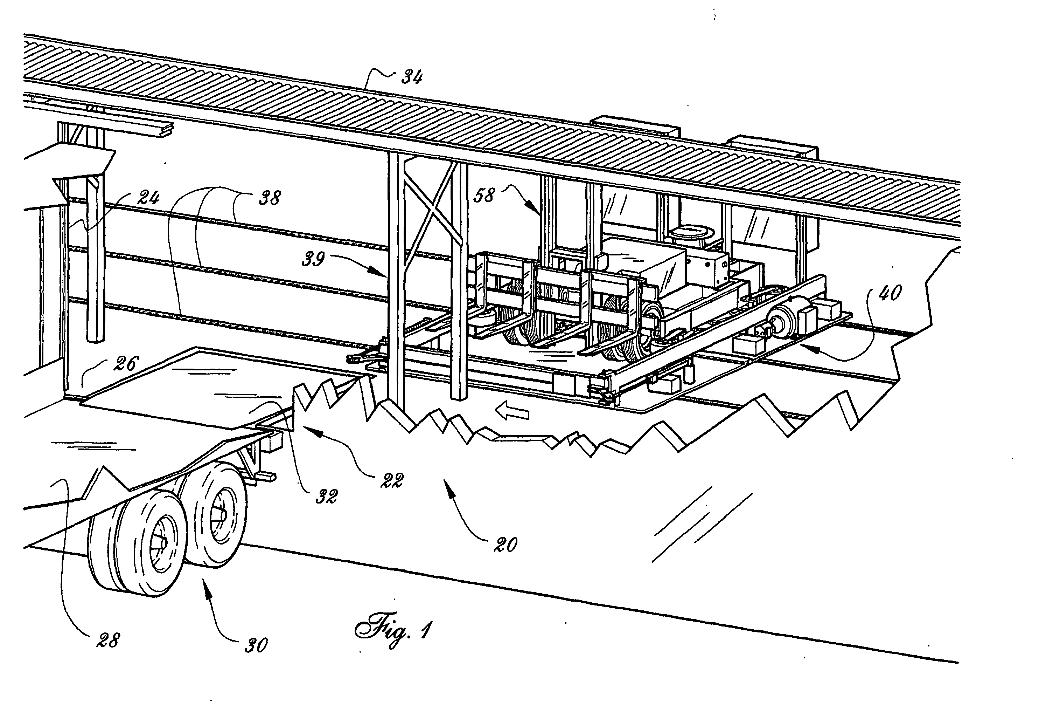

Figure 1 shows a loading station 20 including a loading dock 22 defined by an opening 24 in a wall of a building and a floor portion 26 which is substantially at a same height as the flooring 28 of a semi-trailer 30 which registers with loading station 20. As known in the art, a pivotable panel 32 hingedly attached to dock floor 26 bridges the dock floor 26 and the semi-trailer floor 28 and acts as a ramp to compensate any vertical offset between dock floor 26 and semi-trailer floor 28.

In the description hereinafter, reference will be made to the loading of articles into semi-trailer 30, although it is understood that the unloading of articles therefrom could be accomplished by reversing the steps accomplished to load the semi-trailer 30. Also, although a semi-trailer conventionally used with a truck is shown, it is understood that loading and unloading of articles with the system according to the present invention could be accomplished onto other vehicles or machinery having a similar structure as the semi-trailer 30.

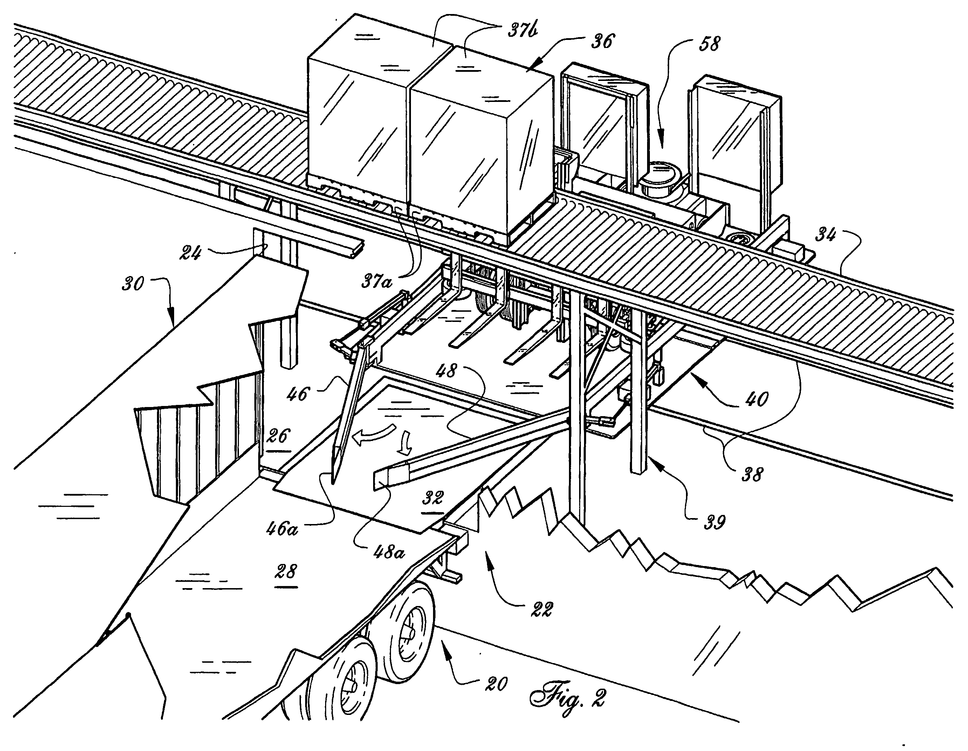

Figures 1 and 2 show that loading station 20 further includes an overhead conveyor 34 of conventional construction, which is destined to convey palletized articles 36 to loading station 20, i.e. in general register with dock 22, as will be detailed hereinafter. Conveyor 34 runs parallel to dock opening 24 and vertically clears same by the support of spaced-apart upright posts 39 which horizontally clear opening 24. Palletized articles 36 include two pallets 37a supporting boxed goods 37b.

A set of three rails 38 are fixedly installed on the floor parallel to the dock opening 24, so as to carry a bogie 40 movable along rails 38 between loading station 20 and other similar loading stations (not shown). Rails 38 run parallel to conveyor 34, and thus bogie 40 is movable parallel to and along conveyor 34, as suggested in figure 1. To load articles 36 into semi-trailer 30, bogie 40 is initally automatically positioned in centered register with dock opening 24, as shown in figure 2. Also, conveyor 34 moves to align articles 36 with bogie 40, and thus articles 36 and bogie 40 are always symmetrically aligned relative to each other through electronic control devices (not shown).

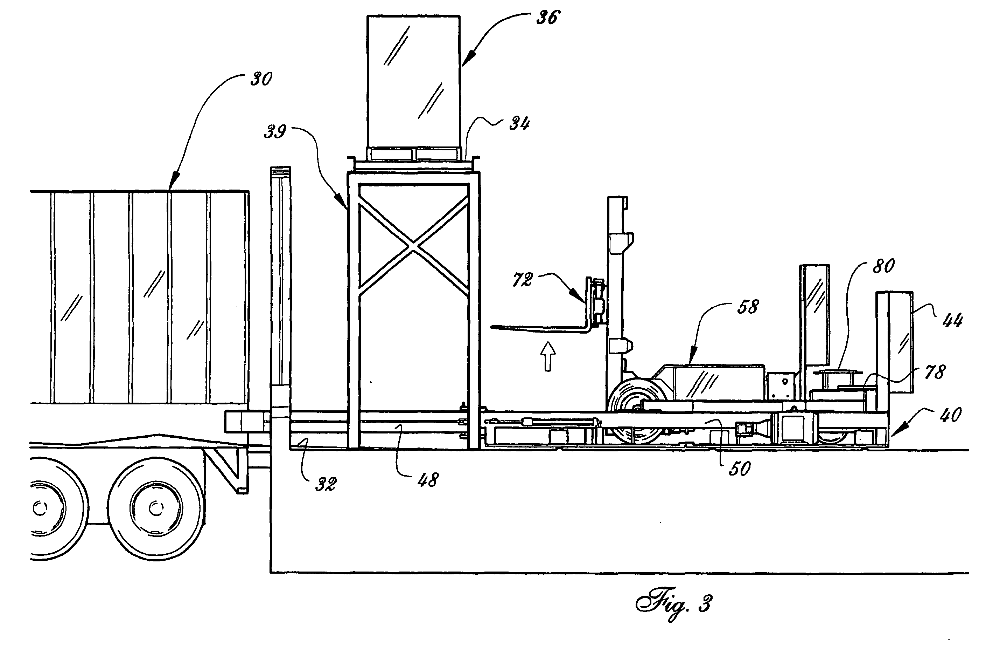

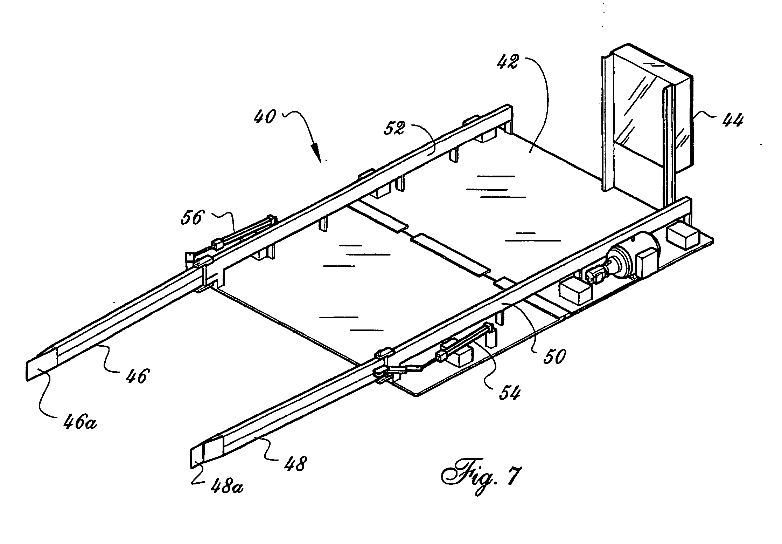

Bogie 40 is shown in figure 7, and includes a rigid, flat platform 42 and a rearwardly positioned control panel 44 which allows the controller to selectively move bogie 40 along rails 38 and which further allows the controller to selectively pivot frontwardly located alignment gates 46,48 between a closed condition (shown in figure 1), through an intermediate partly opened condition (shown in figure 2) into an opened condition (shown in figures 3-7). In their opened condition, gates 46, 48 become coextensive with fixed lateral railings 50, 52 provided on each side of bogie 40, to form elongated alignment gate members preferably having substantially flat inner surfaces. The gates 46, 48 are sized to extend with their outer free end portions slightly beyond dock opening 24 when they are extracted, so as to be engageable with their outer free tips 46a, 48a against the lateral inner walls of the truck semi-trailer 30 and become co-extensive and substantially collinear with the railings 50, 52. As shown in figure 7, hydraulic rams 54, 56 are used to control the pivotal displacement of gates 46, 48.

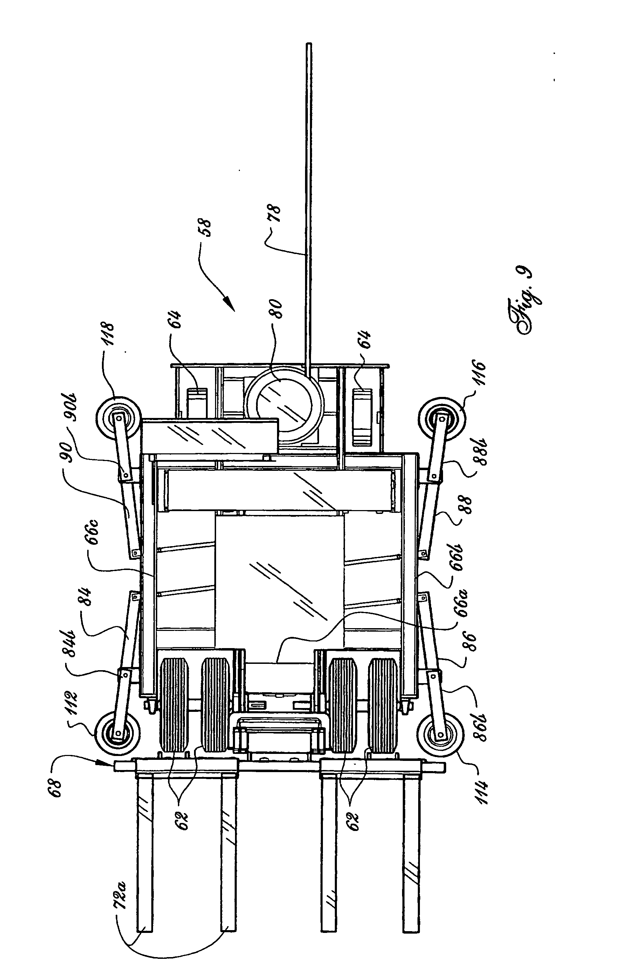

A forklift carriage 58 is provided on bogie 40, as shown in figures 1-6 and 8-11. Carriage 58 comprises a frame structure 60 supported over ground by a number of front and rear support wheels 62 and 64 respectively, with front support wheels 62 being larger since they will support the main load of palletized articles 36 when temporarily transported by carriage 58, as described hereinafter. Frame 60 has a number of perpendicularly arranged bars 66 to form a rigid structure, including a frontmost bar 66a supporting a forklift structure 68 and lateral bars 66b, 66c (figures 9-10).

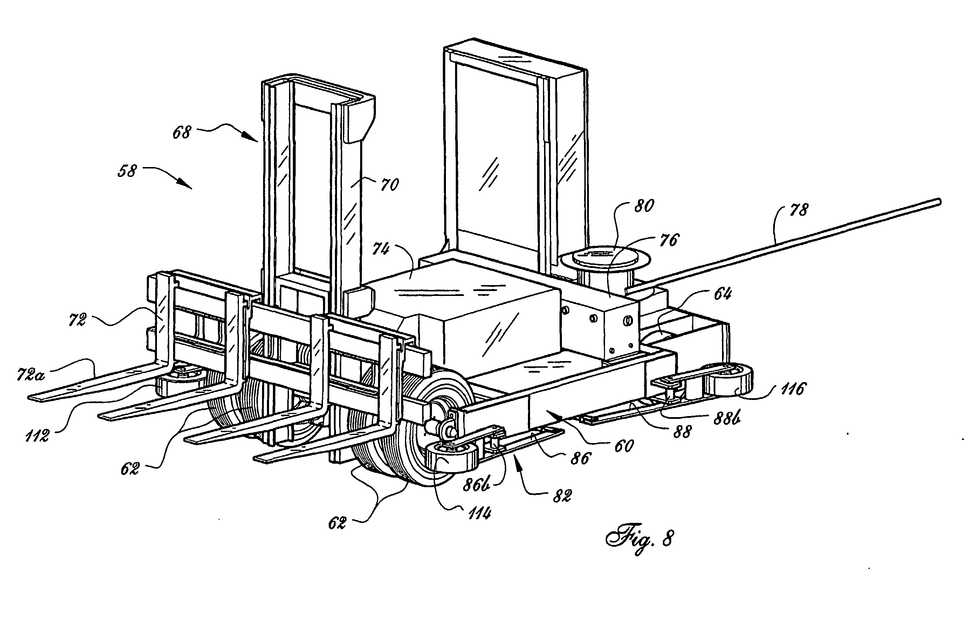

Forklift structure 68 includes a vertically disposed track member 70 fixedly attached to frontmost bar 66a of frame 60, along which a fork member 72, e.g. including four forks 72a as shown in the drawings, is vertically movable under the selectively activated bias of an actuation member in the form of a hydraulic cylinder (not shown). The fork member 72 and track member 70 assembly is of known construction, and is actuated by know means. Frame 60 further supports a casing 74 enclosing the motor elements of carriage 58, and a hydraulic fluid reservoir 76 for feeding the hydraulic cylinder allowing the vertical movement of fork member 72. A wire 78 power feeds the carriage motor, wire 78 being linked to the bogie control panel 44 as shown in figures 3-6. Figures 8-9 further show that a spring-loaded rotatable spool 80 is provided at the rear end portion of carriage 58, on frame 60, with the wire 78 being wound around spool 80 so that wire 78 remain tensioned over ground between carriage 58 and control panel 44 while being long enough to be unrolled and allow movement of carriage 58 away from and back towards control panel 44. A carriage control panel 81 is carried at the rear end of frame 60.

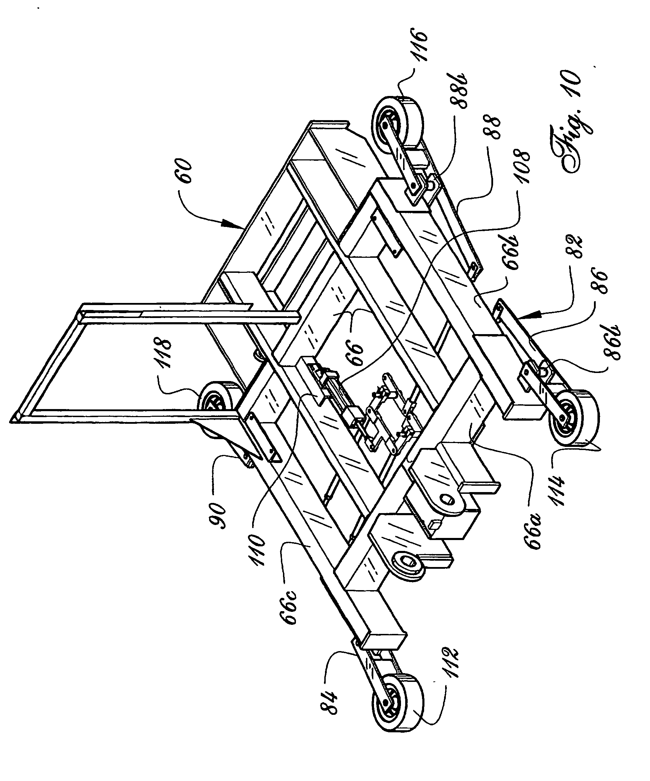

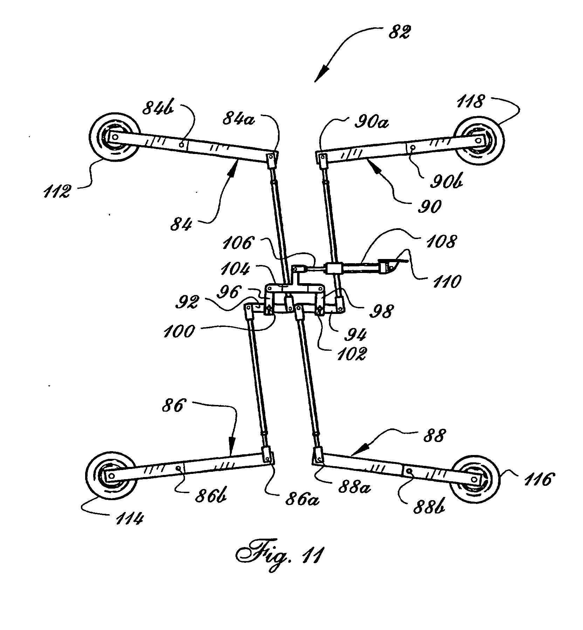

Carriage 58 is further provided with a spring-loaded linkage 82 which is located under and attached to frame 60. Linkage 82 is independently shown in figure 11, but can be seen also in figures 8-10. More particularly, linkage 82 comprises four elbowed L-shaped links 84, 86, 88, 90 which are each pivotable at their respective elbows 84a, 86a, 88a, 90a and which are pivotally linked by pairs with short rods 92, 94 centrally under frame 60, i.e. rear links 88, 90 are pivotally attached to rear rod 94, and front links 84, 86 are pivotally attached to front rod 92. Rods 92, 94 are in turn centrally integrally attached to the end portions of intermediate plates 96, 98 at 100, 102, with pivots 100, 102 being pivotally mounted to the frame 60 (not shown in figure 10). Thus, rod 92 and plate 96 are forced into integral pivotal displacement about pivot 100, as are rod 94 and plate 98 about pivot 102. Intermediate plates 96, 98 are pivotally attached to the two opposite ends of a T-shaped plate 104, which is in turn pivotally attached to the outer extremity of the movable rod 106 of a hydraulic cylinder 108 fixedly attached at its base to frame 60 at 110. Links 84, 86, 88, 90 are each pivotally attached to the carriage main frame 60 at 84b, 86b, 88b, 90b, and support horizontally disposed idle guide wheels 112, 114, 116, 118 at their outer free ends.

Thus, due to the interconnection of the different links, bars and rods of linkage 82, and to the fact that linkage 82 is only pivotally attached to frame 60 at 84b, 86b, 88b, 90b, at 100, 102 and at 110, guide wheels 112, 114, 116, 118 are integrally linked in their movements by linkage 82, i.e. if one wheel such as wheel 112 is force inwardly, then all other wheels 114, 116,118 will also be forced to pivot inwardly of a same distance. Guide wheels 112, 114, 116, 118 thus pivot in a common symmetrical motion, relative to frame 60, from an outer limit position to an inner limit position. Hydraulic cylinder 108 continuously biases wheels 112, 114, 116, 118, by means of linkage 82, towards said outer limit position.

Wheels of a same side, i.e. wheels 112 and 118 and wheels 114 and 116, are longitudinally aligned, and each pair of longitudinally aligned wheels 112, 118 and 114, 116 laterally protrudes beyond all other structural elements of carriage 58, even when wheels 112, 114, 116, 118 are pivoted into their inner limit position.

In use, to load palletized articles 36 into a semi-trailer 30, bogie 40 is moved along rails 38 towards loading station 20 as shown in figure 1, until it becomes aligned in facing register and centered with dock 22 as shown in figure 2. Automated cue means then trigger the controls of bogie 40 to immobilize it at this position, bogie 40 then also being in facing register with articles 36 since the latter, as stated hereinabove, are centrally aligned relative to bogie 40 by conveyor 34. The bogie gates 46, 48 are then pivoted towards their opened condition as also shown in figure 2, until they abut against the side walls of the semi-trailer 30 with their tips 46a, 48a. Gates 46, 48, in their opened condition, are then co-extensive and approximately collinear with the railings 50, 52, so as to define a carriage path from bogie 40 to semi-trailer 30.

The rear opening of semi-trailer 30 has been positioned in approximate facing register with dock 22 by a truck driver, but slight positional deviations of semi-trailer 30 relative to dock 22 can and in practice do occur. Indeed, it is likely that the semi-trailer 30 may not be exactly perpendicular to the dock opening 24 and/or not exactly centered relative to the dock opening 24, and thus a slight angular deviation of gates 46,48 in their opened condition relative to railings 50, 52 is possible, since the gates' outer free tips 46a, 48a abut against the misaligned semi-trailer opening. Also, depending on the width of the semi-trailer 30 opening, gates 46,48 may be disposed in a parallel or in a more or less convergent fashion. However, railing 50 forms a continuous gate member with gate 48, as does railing 52 with gate 46, albeit not necessarily a straight one, which results in the "substantially" collinear relationship.

Once gates 46, 48 are in their opened condition, detection devices on bogie 40 measure the angles of gates 46, 48, and by simple trigonometric calculations based on the respective angles of gates 46, 48 which abut with their tips 46a, 48a against the semi-trailer 30 rear opening, bogie 40 moves so as to center itself relative to the semi-trailer 30 rear opening. Conveyor 34 then also moves consequently to align palletized articles 36 with the corrected position of bogie 40 by means of electronic cue means.

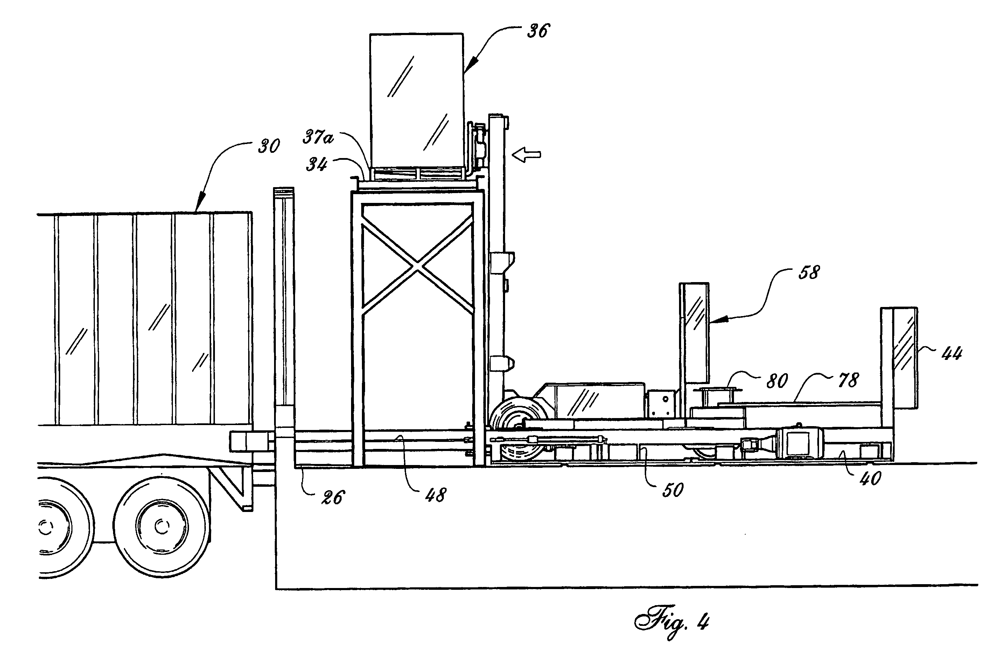

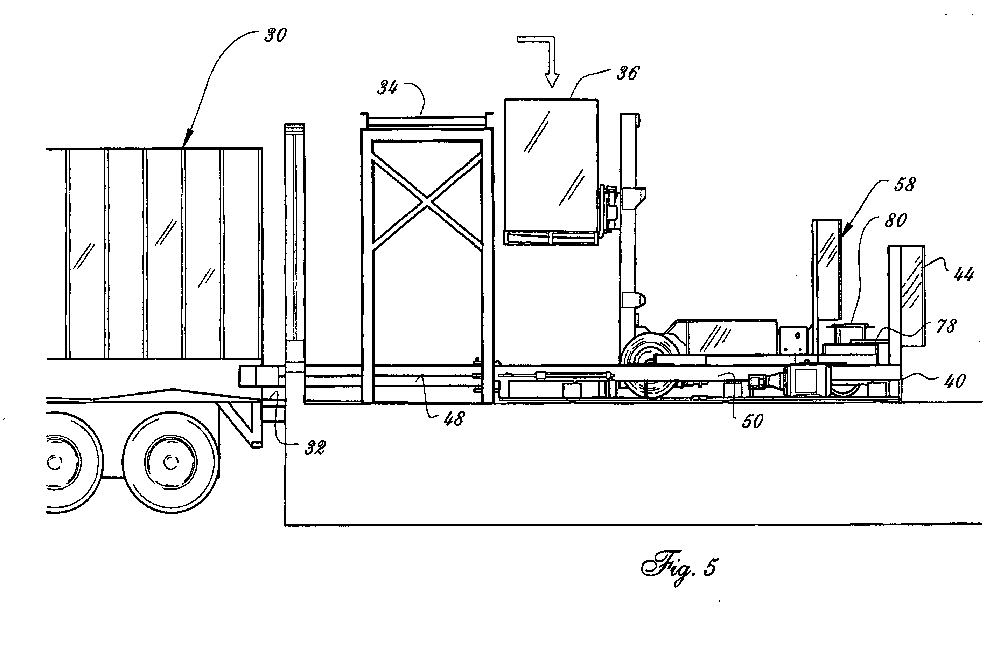

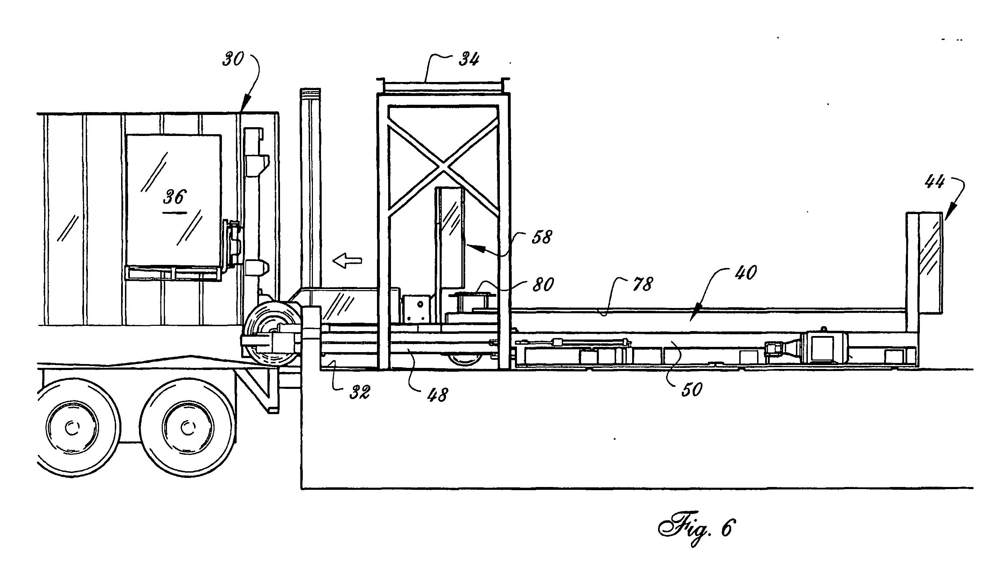

The fork member 72 of forklift carriage 58 is then raised, as shown in figure 3, and carriage 58 moved forward as shown in figure 4 so that fork member 72 engage in a known manner the pallets 37a of palletized articles 36 located on overhead conveyor 34. Since palletized articles 36 are symmetrically aligned relative to bogie 40, articles are thus loaded on fork member 72 in a centered manner. As shown in figure 5, articles 36 are then retrieved by carriage 58 which moves rearwardly and then lowers its fork member 72. Carriage 58 finally moves forward into semi-trailer 30 as shown in figure 6 to unload the articles 36 therein. As shown in the drawings, the height of conveyor 34 is greater than that of dock opening 24, and thus the articles 36, destined to fit into a semi-trailer 30 and thus to also fit through dock opening 24, will vertically fit under conveyor 34.

According to the invention, the spring-loaded alignment linkage 82 allows carriage 58 to self- align and remain centered while it moves forward and backward between the railings 50, 52, the gates 46, 48 and into the semi-trailer 30. Indeed, the carriage guide wheels 112, 114, 116, 118 are continuously forced outwardly under the bias of hydraulic cylinder 108, and continuously engage in their initial position the railings 50, 52 of bogie 40. When carriage 58 moves forward towards semi-trailer 30, guide wheels 112, 114, 116, 118 will continuously engage successively the railings 50, 52, the gates 46, 48 and the inner side walls of the semi-trailer 30. Moreover, the force exerted by hydraulic cylinder 108 will force guide wheels 112, 114, 116, 118 to remain symmetrically disposed relative to frame 60 as carriage 58 advances, thereby effectively centering the carriage 58 during its path towards and into the semi-trailer 30.

Consequently, even if the semi-trailer is not perfectly centered or angularly oriented relative to the dock 22, the guide wheels 112, 114, 116, 118 in combination with the spring-loaded linkage 82, will ensure that carriage 58 enters the semi-trailer 30 in a correctly aligned and centered fashion. This is why carriage 58 is said to be self-aligning.

It can be seen that the system according to the present invention can be used with semi-trailer trucks 30 of different widths. Indeed, if the semi-trailer is narrower, then the gates 46, 48 will abut against the semi-trailer side walls in a slightly convergent fashion, with the spring-loaded linkage 82 and the idle guide wheels 112, 114, 116, 118 compensating for the narrower path along which carriage 58 must advance by being contracted by the converging gates.

Preferably, the lateral offset between the pairs of longitudinally aligned wheels at the wheels outer limit position will be equal to or wider than the wider dimensions of semi-trailer trucks, and the angular deflections of linkage 82 will allow the pairs of longitudinally aligned wheels 112, 118 and 114, 116 to become at least as narrow as the narrower dimensions of semi-trailer trucks. For example, in North America, the width of conventional semi-trailers varies between approximately 94 inches (240 centimeters) and 102 inches (260 centimeters). Thus, the angular deflection of guide wheels 112, 114, 116, 118 would allow the width of the longitudinally aligned pairs of guide wheels 112, 118 and 114, 116 to vary at least between the above-mentioned dimensions, so that carriage 58 would operatively fit into semi-trailers of all conventional dimensions. Of course, dimensional adjustments may be envisioned on linkage 82, to fit trucks of varying sizes, the above dimensions being provided as examples.

It is noted that with the system according to the present invention, loading of articles into semi-trailer 30 may be accomplished automatically, without any human intervention, after the operation is initiated. Indeed, the following sequential steps are automatically accomplished by the system according to the present invention:
a) initial positioning of bogie 40 in centered relationship with dock opening 24;
b) opening of gates 46, 48 until they abut against the semi-trailer 30 rear opening;
c) positional rectification of bogie 40 for centered alignment with the semi-trailer 30 storage area to reach a symmetrical angular relationship of gates 46, 48;
d) articles 36 are conveyed by conveyor 34 until they come in centered alignement with bogie 40 in its corrected position;
e) loading of palletized articles 36 onto carriage 58;
f) unloading of articles 36 from carriage 58 into the semi-trailer 30 storage area by carriage 58; and
g) return of carriage 58 to bogie 40;
where steps (d) to (g) may be repeated a number of times to load numerous palletized articles into semi-trailer 30, with the orientation of bogie 40 being corrected accordingly, if semi-trailer 30 is angularly offset relative to the loading station 22, by the action of the idle wheels 112, 114, 116, 118 and of linkage 82. The control units for controlling the displacements and movements of bogie 40, carriage 58 and conveyor 34 can be located in control panels 44 and 81.

Any further modification to the present invention, which does not deviate from the scope thereof as specified in the claims, is considered to be included therein.

For example, it could be envisioned to provide a system according to the present invention which would comprise a single loading station, and consequently in which the transversely moving bogie would not be required.

Also, it could be envisioned to provide a system according to the invention lacking the carriage-guiding railings 50, 52 and pivotable gates 46, 48, in which the carriage 58 is initially aligned with the truck semi-trailer opening by other means, and then moved forward into the semi-trailer opening repetitively to successively load a number of articles. However, this is not the preferred way to carry out the invention.

Also, other article-carrying devices than forklift members could be used.

The hydraulic cylinder 108 used to force idle guide wheels 112, 114, 116, 118 towards their outer limit position, could be replaced by any suitable spring member, although the hydraulic cylinder remains the preferred way to carry out the invention.

The guide wheels shown could be replaced with suitable sliding elements, e.g. small skis made of a sliding material such as nylon.

## Claims

1. A loading and unloading system (20) for loading articles (36) into and unloading articles from a number of storage areas each having an open end and inner side walls, said system including a carriage (58) for carrying articles, said carriage having two sides (66b, 66c), and a front and a rear end defining a longitudinal axis therebetween, said carriage comprising a main rigid frame (60) movable over ground along said longitudinal axis by ground-engaging wheels rollably mounted to said frame parallel to said longitudinal axis a motor for feeding power to and driving said carriage along said longitudinal axis, and a powered article-carrying device (68) mounted to said carriage frame for carrying the articles on said carriage,
**characterized in that** said loading and unloading system further comprises a number of lateral idle guide elements (112, 114, 116, 118) mounted to said frame and laterally protruding beyond said frame on both said carriage sides for engagement of said guide elements against the storage area side walls outboard of said carriage, and a linkage (82) pivotally attached to said frame, carrying and interconnecting said guide elements and forcing said guide elements into an integral common displacement relative to said frame so that they remain symmetrically disposed relative to said longitudinal axis at all times, said guide elements being movable relative to said frame between an inner limit position toward said frame and an outer limit position away from said frame, said carriage also comprising a biasing member (108) mounted to said frame and continuously biasing said guide elements through the instrumentality of said linkage towards said outer limit position, wherein said carriage is adapted for self-alignment and self-centering between the side walls of the storage area by said guide elements continuously engaging the side walls and by said linkage and said biasing member forcing said guide elements to remain symmetrically disposed relative to said longitudinal axis.

2. A system as defined in claim 1, further comprising a bogie (40), able to carry said carriage and movable along a bogie horizontal axis transverse to said carriage longitudinal axis, said bogie comprising a motor for feeding power to and moving said bogie along said bogie axis, and a platform (42) for receiving and supporting said carriage thereon and defining two sides and a front and a rear end portions, said bogie front end portion being opened at least when said carriage rolls out of and back onto said bogie, wherein said bogie is movable between the storage areas to allow said carriage to load articles onto and unload articles from the different storage areas.

3. A system as defined in claim 2, wherein said guide elements are idle guide wheels (112, 114, 116, 118), with said linkage rollably carrying said idle guide wheels, wherein said carriage is adapted for self-alignment and self-centering between the storage area side walls by said guide wheels continuously rollably engaging the storage area side walls and by said linkage and said biasing member forcing said guide wheels to remain symmetrically disposed relative to said carriage frame at all times.

4. A system as defined in claim 3, wherein said bogie comprises two parallel railings (50, 52) each fixedly attached to a corresponding said side of said bogie, the distance between said railings being equal to or lesser than the width of said carriage when said guide wheels are in said outer limit position, said railings vertically registering with said guide wheels, said guide wheels consequently continuously engaging said railings while said carriage is located between said railings for self-aligning and self-centering said carriage on said bogie due to said biasing member and said linkage.

5. A system as defined in claim 4, wherein said bogie further comprises a pair of gates (46, 48) pivotally mounted on each said side of said bogie at said bogie front end portion, said gates vertically registering with said carriage guide wheels and being pivotable between a closed condition in which they do not extend beyond the bogie front end portion, and an opened condition in which they extend beyond the bogie front end portion in a co-extensive and substantially collinear fashion relative to said railings, said gates having outer free ends (46a, 48a) destined to engage the two storage area side walls, for providing continuous side panels formed on either side of said carriage by said railings, said gates and the storage area side walls, for continuous engagement of these side panels by said carriage guide wheels when said carriage moves between said bogie and the storage area, said carriage thus being self-aligned and self-centered relative to the storage area during article loading and unloading operations in the storage area.

6. A system as defined in claim 5, further comprising a control unit (44, 81) for automatically controlling the displacement of said bogie along said bogie axis, the displacement of said carriage along said longitudinal axis, and the pivotal displacement of said gates.

7. A system as defined in claim 5, wherein said control unit (44), can adjust the position of said bogie (40) when said gates (46, 48) are in said opened position according to the respective angles of said gates in said opened position, for centering said bogie between the storage area side walls.

8. A system as defined in claim 1, wherein said biasing member is a hydraulic cylinder (108).

9. A system as defined in claim 6, further comprising a conveyor (34) for conveying articles and located frontwardly of said bogie, wherein said carriage is destined to carry the articles with said article-carrying device from said conveyor into the loading area for unloading them therein.

10. A system as defined in claim 9, wherein said powered article-carrying device is a powered hydraulic forklift member (68) located at said carriage front end.

11. A system as defined in claim 10, wherein said conveyor is an overhead conveyor (34) located spacedly above ground, said carriage carrying the articles being destined to move underneath said overhead conveyor and to reach the articles on the conveyor with said forklift member.

12. A system as defined in claim 11, wherein said control unit further automatically controls said conveyor, for positioning the articles thereon in a precise centered relationship relative to said bogie.

## Patentansprüche

1. Lade- und Entladesystem (20) zum Laden von Artikeln (36) in und zum Entladen von Artikeln von einer Anzahl von Speicherflächen, jede mit einem offenen Ende und mit inneren Seitenwänden, wobei das System einen Wagen (58) einschliesst, um die Artikel zu transportieren, der Wagen zwei Seiten (66b, 66c) sowie ein vorderes und ein hinteres Ende besitzt, wozwischen eine Längsachse definiert wird, und der Wagen ein starres Hauptgestell (60) umfasst, das entlang der Längsachse über dem Boden durch den Boden greifende Räder bewegt werden kann, die parallel zur Längsachse rollend am Gestell montiert sind, ferner einen Motor, der den Wagen mit Energie versorgt und entlang der Längsachse antreibt, sowie eine kraftgetriebene, die Artikel transportierende Vorrichtung (68), die an das Wagengestell montiert ist, um die Artikel auf dem Wagen zu transportieren,
**dadurch gekennzeichnet, dass** das Lade- und Entladesystem weiter eine Anzahl seitlicher, freier Führungselemente (112, 114, 116, 118) umfasst, die an das Gestell montiert sind und seitlich auf beiden Seiten des Wagens über das Gestell hinaus ragen, damit die Führungselemente mit den Seitenwänden der Speicherflächen ausserhalb des Wagens in Eingriff gelangen, während eine Kupplung (82) drehbar am Gestell angebracht ist, die die Führungselemente trägt und miteinander verbindet und die Führungselemente zu einer gemeinsamen, integralen Bewegung relativ zum Gestell zwingt, so dass sie zu allen Zeiten bezüglich der Längsachse symmetrisch angeordnet bleiben, wobei die Führungselemente bezüglich des Gestells zwischen einer inneren Grenzlage zum Gestell hin und einer äusseren Grenzlage vom Gestell weg bewegt werden können, während der Wagen auch ein Vorspannelement (108) umfasst, das an das Gestell montiert ist und vermittels der Kupplung die Führungselemente kontinuierlich zur äusseren Grenzlage hin drückt, wobei der Wagen zu einer selbsttätigen Ausrichtung und Zentrierung zwischen den Seitenwänden der Speicherfläche befähigt ist, indem die Führungselemente kontinuierlich mit den Seitenwänden in Eingriff gelangen und die Kupplung und das Vorspannelement die Führungselemente zwingen, bezüglich der Längsachse symmetrisch angeordnet zu bleiben.

2. System, wie in Anspruch 1 definiert, weiter ein Drehgestell (40) umfassend, das in der Lage ist, den Wagen zu tragen, und das entlang einer waagerechten Achse des Drehgestells quer zur Längsachse des Wagens bewegt werden kann, wobei das Drehgestell einen Motor, um Kraft an das Drehgestell zu liefern und das Drehgestell entlang seiner Achse zu bewegen, sowie eine Plattform (42) umfasst, um den Wagen darauf aufzunehmen und zu halten und zwei Seiten sowie einen vorderen und einen hinteren Endabschnitt zu definieren, wobei der vordere Endabschnitt des Drehgestells zumindest dann geöffnet wird, wenn der Wagen aus dem Drehgestell herausrollt und in das Drehgestell zurückrollt, worin das Drehgestell zwischen den Speicherflächen bewegt werden kann, um es dem Wagen zu ermöglichen, Artikel auf verschiedene Speicherflächen zu laden und davon zu entladen.

3. System, wie in Anspruch 2 definiert, worin die Führungselemente freie Führungsrollen (112, 114, 116, 118) sind und die Kupplung diese freien Führungsrollen rollbar trägt, worin der Wagen zu einer selbsttätigen Ausrichtung und Zentrierung zwischen den Seitenwänden der Speicherflächen befähigt ist, indem die Führungsrollen kontinuierlich rollend mit den Seitenwänden der Speicherflächen in Eingriff gelangen und die Kupplung und das Vorspannelement die Führungsrollen zwingen, bezüglich des Wagengestells immer symmetrisch angeordnet zu bleiben.

4. System, wie in Anspruch 3 definiert, worin das Drehgestell zwei parallele Geländer (50, 52) umfasst, jedes fest an einer entsprechenden Seite des Drehgestells angebracht, wobei der Abstand zwischen den Geländern gleich der Breite des Wagens oder kleiner als diese ist, wenn sich die Führungsrollen in der äusseren Grenzlage befinden, die Geländer vertikal mit den Führungsrollen in Deckung sind und die Führungsrollen folglich kontinuierlich mit den Geländern in Eingriff gelangen, während der Wagen sich zur selbsttätigen Ausrichtung und Zentrierung auf dem Drehgestell vermittels des Vorspannelements und der Kupplung zwischen den Geländern befindet.

5. System, wie in Anspruch 4 definiert, worin das Drehgestell weiter ein Paar von Toren (46, 48) umfasst, die zu beiden Seiten des Drehgestells am vorderen Endabschnitt des Drehgestells drehbar montiert sind, wobei die Tore vertikal mit den Führungsrollen des Wagens in Deckung sind und zwischen einem geschlossenen Zustand, in dem sie sich nicht über den vorderen Endabschnitt des Drehgestells hinaus erstrecken, und einem geöffneten Zustand, in dem sie sich gleichweit und im Wesentlichen kolinear mit den Geländern über den vorderen Endabschnitt des Drehgestells hinaus erstrecken, geschwenkt werden können, und wobei die Tore freie äussere Enden (46a, 48a) besitzen, die dafür bestimmt sind, mit den beiden Seitenwänden der Speicherflächen in Eingriff zu gelangen, um durchgehende seitliche Wände zu liefern, die zu beiden Seiten des Wagens durch die Geländer, die Tore und die Seitenwände der Speicherflächen gebildet werden, damit diese seitlichen Wände kontinuierlich mit den Führungsrollen des Wagens im Eingriff stehen, wenn sich der Wagen zwischen dem Drehgestell und der Speicherfläche bewegt, wodurch der Wagen während der Operationen des Ladens und Entladens von Artikeln auf den Speicherflächen bezüglich der Speicherfläche selbsttätig ausgerichtet und zentriert wird.

6. System, wie in Anspruch 5 definiert, weiter eine Steuereinheit (44, 81) fiir die automatische Steuerung der Bewegung des Drehgestells entlang der Achse des Drehgestells, der Bewegung des Wagens entlang der Längsachse und der Schwenkbewegung der Tore umfassend.

7. System, wie in Anspruch 5 definiert, worin die Steuereinheit (44) die Position des Drehgestells (40) zu dessen Zentrierung zwischen den Seitenwänden der Speicherfläche in Übereinstimmung mit den jeweiligen Winkeln der Tore in der offenen Stellung regulieren kann, wenn sich die Tore (46, 48) in ihrer offenen Stellung befinden.

8. System, wie in Anspruch 1 definiert, worin das Vorspannelement ein hydraulischer Zylinder (108) ist.

9. System, wie in Anspruch 6 definiert, weiter ein Förderband (34) umfassend, das Artikel transportiert und sich vor dem Drehgestell befindet, worin der Wagen dafür bestimmt ist, mit der die Artikel transportierenden Vorrichtung die Artikel vom Förderband zur Ladefläche zu transportieren, um sie dort zu entladen.

10. System, wie in Anspruch 9 definiert, worin die kraftgetriebene, Artikel transportierende Vorrichtung ein motorgetriebener Gabelstapler (68) ist, der sich am vorderen Ende des Wagens befindet.

11. System, wie in Anspruch 10 definiert, worin das Förderband ein in einem Abstand über dem Boden befindliches, hochliegendes Förderband (34) ist und der die Artikel transportierende Wagen dafür bestimmt ist, sich unterhalb dieser hochliegenden Förderbandes zu bewegen und die Artikel auf dem Förderband mit dem Gabelstapler zu erreichen.

12. System, wie in Anspruch 11 definiert, worin die Steuereinheit des Weiteren das Förderband automatisch steuert, um die Artikel darauf in einer genauen, bezüglich des Drehgestells zentrierten Beziehung zu positionieren.

## Revendications

1. Un système de chargement et déchargement (20) pour charger des articles (36) dessus et décharger des articles depuis plusieurs espaces de stockage, chacun disposant d'une sortie ouverte et des parois latérales intérieures, ledit système comprenant un chariot (58) pour transporter des articles, ledit chariot ayant deux côtés (66b, 66c) et une partie avant et une partie arrière définissant un axe longitudinal entre les deux, ledit chariot comprenant un châssis rigide principal (60) déplaçable sur le sol le long dudit axe longitudinal par des roues de contact au sol montées roulant sur ledit châssis parallèlement à l'axe longitudinal, un moteur pour alimenter en puissance et pour conduire ledit chariot le long dudit axe longitudinal, et un dispositif de transport d'articles actionné (68) monté sur ledit châssis du chariot pour déplacer les articles sur ledit chariot, **caractérisé en ce que** ledit système de chargement/déchargement comprend de plus un certain nombre d'éléments de guidage latéral libres (112, 114,116,118) montés sur ledit châssis et s'étendant latéralement au-delà dudit châssis sur les deux côtés dudit chariot pour l'engagement desdits éléments de guidage contre les parois latérales de l'espace de stockage de surfaces à l'extérieur dudit chariot, et un élément de liaison (82) monté pivotant sur ledit châssis, transportant et reliant lesdits éléments de guidage et forçant lesdits éléments de guidage dans un déplacement solidaire commun relatif audit châssis de sorte qu'ils restent en permanence symétriquement disposés relativement audit axe longitudinal, lesdits éléments de guidage étant mobiles par rapport audit châssis entre une position limite intérieure en direction dudit châssis et une position limite extérieure éloignée par rapport audit châssis, ledit chariot comprenant de plus un élément de contrainte (108) monté sur ledit châssis et contraignant lesdits éléments de guidage par l'intermédiaire dudit élément de liaison en direction de ladite position limite extérieure, et **en ce que** ledit chariot est adapté pour un auto-alignement et un auto-centrage entre les parois latérales de l'espace de stockage par les éléments de guidage s'engageant en continu avec les parois latérales et par ledit élément de liaison et élément de contrainte forçant lesdits éléments de guidage à rester symétriquement disposés par rapport audit axe longitudinal.

2. Un système tel qui défini dans la revendication 1, comprenant de plus un bogie (40), capable de porter ledit chariot et étant mobile le long de l'axe horizontal de bogie traversant l'axe longitudinal dudit chariot, ledit bogie comprenant un moteur pour alimenter en puissance et assurer le déplacement dudit bogie le long de l'axe dudit bogie, et une plate-forme (42) pour recevoir et soutenir ledit chariot au-dessus et définissant deux côtés et une partie frontale et arrière, ladite partie frontale du bogie étant ouverte au moins lorsque ledit chariot se déplace le long dudit bogie, et en ce que ledit bogie est mobile entre les espaces de stockage pour permettre audit chariot de charger des articles et décharger ces articles depuis différents espaces de stockage.

3. Un système tel que défini dans la revendication 2, dans lequel lesdits éléments de guidage sont des roues de guidage libres (112, 114, 116, 118), avec ledit élément de liaison supportant en rotation lesdites roues de guidage libres, dans lequel ledit châssis est adapté pour un auto-alignement et un auto-centrage entre les parois latérales de l'espace de stockage par les éléments de guidage s'engageant en continu avec les parois latérales et par ledit élément de liaison et élément de contrainte forçant lesdites roues de guidage de rester en permanence symétriquement disposées par rapport audit chariot.

4. Un système tel que défini dans la revendication 3, dans lequel ledit bogie comprend deux rails parallèles (50, 52) chacun rigidement attaché à un coté correspondant dudit bogie, la distance entre lesdits rails étant égale ou à inférieure à la largeur dudit chariot lorsque lesdites roues de guidage sont dans le position de limite extérieure, lesdits rails définissant une correspondance verticale avec lesdites roues de guidage, lesdites roues de guidage s'engageant en conséquence en continu sur lesdits rails lorsque ledit chariot est placé entre lesdits rails pour l'auto-alignement et l'auto-centrage dudit chariot sur ledit bogie du fait dudit élément de contrainte et dudit élément de liaison.

5. Un système tel que défini dans la revendication 4, dans lequel ledit bogie comprend de plus une paire de portes (46, 48) montées pivotantes sur chaque coté dudit bogie sur la partie frontale dudit chariot, lesdites portes définissant une correspondance verticale avec lesdites roues de guidage du chariot et étant pivotante entre une position fermée dans laquelle elles ne s'étendent pas au-delà la partie frontale du bogie, et une position ouverte dans laquelle elles s'étendent au-delà de la partie frontale du bogie dans un mode d'extension simultané et co-linéaire relatif auxdits rails, lesdites portes comprenant des extrémités libres (46a, 48a) destinées à s'engager avec les deux parois de l'espace de stockage, fournissant des faces latérales formées par chaque coté dudit chariot par lesdits rails, lesdites portes et parois de l'espace de stockage, s'engageant en continu avec les parois latérales et par lesdites roue de guidage du chariot lorsque le chariot se déplace entre ledit bogie et l'espace de stockage, ledit chariot étant auto-aligné et auto-centré par rapport à l'espace de stockage durant les opérations de chargement et de déchargement d'article dans l'espace de stockage.

6. Un système tel que défini dans la revendication 5, comprenant de plus une unité de commande (44, 81) pour contrôler automatiquement le déplacement dudit bogie le long de l'axe dudit bogie, le déplacement dudit chariot le long dudit axe longitudinal et le déplacement angulaire desdites portes.

7. Un système tel que défini dans la revendication 5, dans lequel l'unité de commande (44) peut ajuster la position dudit bogie (40) quand lesdites portes (46, 48) sont dans ladite position ouverte selon les angles respectifs desdites portes dans ladite position ouverte, pour centrer ledit bogie entre les parois de côté de l'espace de stockage.

8. Un système tel que défini dans la revendication 1, dans lequel ledit élément de contrainte est un cylindre hydraulique (108).

9. Un système tel que défini dans la revendication 6, comprenant de plus un transporteur (34) pour transporter des articles et placé sur la partie frontale dudit bogie, et dans lequel ledit chariot est destiné à porter les articles avec ledit dispositif porteur d'article dudit transporteur dans l'aire de chargement pour les en décharger.

10. Un système tel que défini dans la revendication 9, dans lequel ledit dispositif porteur d'article actionné est une partie d'un chariot élévateur hydraulique actionné (68) placé sur la partie frontale dudit chariot.

11. Un système tel que défini dans la revendication 10, dans lequel ledit transporteur est un transporteur en tête (34) placé espacé au-dessus du sol, ledit chariot portant les articles étant destiné à se déplacer en-dessous dudit transporteur en-tête et d'atteindre les articles du transporteur avec ladite partie du chariot élévateur.

12. Un système tel que dans la revendication 11, dans lequel ladite unité de commande contrôle de plus automatiquement ledit transporteur, pour positionner dessus les articles dans un rapport centré précis par rapport audit bogie.
